(19) **Europäisches Patentamt / European Patent Office / Office européen des brevets**

(11) **EP 4 189 501 B1**

(12) **EUROPÄISCHE PATENTSCHRIFT**

(45) Veröffentlichungstag und Bekanntmachung des Hinweises auf die Patenterteilung:
**11.06.2025 Patentblatt 2025/24**

(21) Anmeldenummer: **21786773.8**

(22) Anmeldetag: **22.09.2021**

(51) Internationale Patentklassifikation (IPC):
**G05B 19/4065** (2006.01)   **B23Q 17/00** (2006.01)
**B23Q 17/09** (2006.01)

(52) Gemeinsame Patentklassifikation (CPC):
**G05B 19/4065; B23Q 17/007; B23Q 17/0961; B23Q 17/0976;** G05B 2219/37229

(86) Internationale Anmeldenummer:
**PCT/EP2021/076019**

(87) Internationale Veröffentlichungsnummer:
**WO 2022/069308 (07.04.2022 Gazette 2022/14)**

(54) **VERFAHREN ZUR OFFLINE UND/ODER ONLINE IDENTIFIKATION EINES ZUSTANDES EINER WERKZEUGMASCHINE, ZUMINDEST EINES IHRER WERKZEUGE ODER ZUMINDEST EINES DARIN BEARBEITETEN WERKSTÜCKS**

METHOD FOR OFFLINE AND / OR ONLINE IDENTIFICATION OF A STATE OF A MACHINE TOOL, AT LEAST ONE OF ITS TOOLS OR AT LEAST ONE WORKPIECE MACHINED THEREIN

PROCÉDÉ D'IDENTIFICATION HORS LIGNE ET/OU EN LIGNE D'UN ÉTAT D'UNE MACHINE-OUTIL, D'AU MOINS UN DE SES OUTILS OU D'AU MOINS UNE PIÈCE USINÉE PAR CELLE-CI

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.09.2020 EP 20198969**

(43) Veröffentlichungstag der Anmeldung:
**07.06.2023 Patentblatt 2023/23**

(73) Patentinhaber: **Siemens Aktiengesellschaft**
**80333 München (DE)**

(72) Erfinder:
• **KNAPPE, Dominik**
**59077 Hamm (DE)**
• **WASCHEW, Arthur**
**52074 Aachen (DE)**

(74) Vertreter: **Siemens Patent Attorneys**
**Postfach 22 16 34**
**80506 München (DE)**

(56) Entgegenhaltungen:
EP-A1- 3 614 220   WO-A1-2006/037137
DE-A1- 102007 048 961

• ZHU LIDA ET AL: "Recent progress of chatter prediction, detection and suppression in milling", MECHANICAL SYSTEMS AND SIGNAL PROCESSING, ELSEVIER, AMSTERDAM, NL, vol. 143, 31 March 2020 (2020-03-31), XP086151299, ISSN: 0888-3270, [retrieved on 20200331], DOI: 10.1016/J.YMSSP.2020.106840
• GUILLEM QUINTANA ET AL: "Using kernel data in machine tools for the indirect evaluation of surface roughness in vertical milling operations", ROBOTICS AND COMPUTER INTEGRATED MANUFACTURING, ELSEVIER SCIENCE PUBLISHERS BV., BARKING, GB, vol. 27, no. 6, 24 May 2011 (2011-05-24), pages 1011 - 1018, XP028234861, ISSN: 0736-5845, [retrieved on 20110531], DOI: 10.1016/J.RCIM.2011.05.005

## Beschreibung

Verfahren zur offline und/oder online Identifikation eines Zustandes einer Werkzeugmaschine, zumindest eines ihrer Werkzeuge oder zumindest eines darin bearbeiteten Werkstücks Die Erfindung betrifft ein Verfahren zur offline und/oder online Identifikation eines Zustandes einer Werkzeugmaschine, zumindest eines ihrer Werkzeuge oder zumindest eines darin bearbeiteten Werkstücks, bei der die Werkzeugmaschine zumindest eine, vorzugsweise drehbare Einspannvorrichtung zum Einspannen eines zu bearbeitenden Werkstücks und zumindest einen verfahrbaren Werkzeughalter zum Positionieren eines darin gehaltenen Werkzeugs, mit dem das Werkstück bearbeitet werden kann, und Sensoren aufweist, mit denen zumindest die Position des Werkzeugs und/oder des Werkzeughalters orts- und zeitaufgelöst erfassbar ist.

Werkzeugmaschinen, beispielsweise CNC-Maschinen, sind heutzutage mit einer Vielzahl von Sensoren ausgestattet, die unterschiedlichste Betriebsparameter kontinuierlich erfassen können. Die damit ermittelten Zeitreihen für die Betriebsparameter ermöglichen eine Analyse des Betriebszustands der Werkzeugmaschine. So ist es beispielsweise aus der WO 2020/038815 A1 oder ZHU LIDA ET AL: "Recent progress of chatter prediction, detection and suppression in milling",MECHANICAL SYSTEMS AND SIGNAL PROCESSING, ELSEVIER, AMSTERDAM, NL, Bd. 143, 31. März 2020 (2020-03-31)oder noch GUILLEM QUINTANA ET AL: "Using kernel data in machine tools for the indirect evaluation of surface roughness in vertical milling operations",ROBOTICS AND COMPUTER INTEGRATED MANUFACTURING, ELSEVIER SCIENCE PUBLISHERS BV., BARKING, GB, Bd. 27, Nr. 6, 24. Mai 2011 (2011-05-24), Seiten 1011-1018 bekannt, den Zustand einer Vorrichtung unter Verwendung einer trainierten Support-Vector-Maschine zu bestimmen. Dabei wird ein Betriebsparameterraum in Klassifizierungsvolumina unterteilt, von denen zumindest einer ein Normalzustand und zumindest ein anderer ein Fehlerzustand der Vorrichtung identifiziert.

Nachteilig ist, dass es zur Umsetzung einerseits an einem neuronalen Netz und andererseits an umfangreichen Trainingsdaten bedarf, sodass im Stand der Technik ein komplexes Verfahren bereitgestellt wird.

Zudem lassen sich mit dem vorbekannten Verfahren unterschiedliche Normalbetriebszustände einer Werkzeugmaschine nur aufwändig bestimmen. Normalbetriebszustände sind solche Betriebszustände, bei denen die Werkzeugmaschine die vorbestimmten, **d. h.** programmierten Verfahrensschritte bestimmungsgemäß und ohne Fehler durchführt. Zu den Normalbetriebszuständen einer Werkzeugmaschine gehören grundsätzlich als Hauptzustand der Zerspanprozess sowie als Nebenzustände beispielsweise der Rücklauf, Fahrten des Werkzeughalters für einen Werkzeugwechsel, Stillstandszeiten oder simple Leerläufe.

Mithin bestehen derzeit nur beschränkte Möglichkeiten, unrentable Nebenzeiten zu ermitteln und detailliert zu analysieren. Weiterhin können einzelne Sequenzen von einem der Elemente nicht eindeutig bzw. fehlerfrei identifiziert werden. Dabei wird unter einem Element der Werkzeugmaschine ein Bestandteil der Werkzeugmaschine verstanden, welches in der Werkzeugmaschine bewegt werden kann. Mithin ist der Begriff Element in dieser Anmeldung ein Sammelbegriff, worunter im Detail das Werkzeug bzw. die Werkzeuge, deren Werkzeughalter und die Einspannvorrichtung zum Einspannen des Werkstücks verstanden werden kann.

Zwar kann bei einer Prüfung des Betriebszustandes auf Grundlage interner Maschinensignale zwischen Betrieb und Stillstand der Werkzeugmaschine unterschieden werden. Dies wird durch die Leistungsaufnahme der Antriebsmotoren und sich ändernde Positionsdaten des Werkzeughalters bzw. des Werkzeugs realisiert. Nebenzeiten jedoch werden bisher nur abgeschätzt oder manuell an der Maschine aufgenommen. Für eine detaillierte und vollständige Beschreibung des Betriebszustandes wird eine kontinuierliche Dokumentation aller Ereignisse benötigt.

Insofern ist es Aufgabe der Erfindung ein Verfahren zur offline und/oder online Identifikation eines Zustands oder einer Sequenz einer Werkzeugmaschine, wie beispielsweise einer CNC-Werkzeugmaschine bereitzustellen, mit der sich die Betriebszustände bzw. die Sequenzen in einfacher und effizienter Art und Weise identifizieren lassen. Gleichzeitig ist es Aufgabe der Erfindung, eine dazu entsprechende Vorrichtung anzugeben.

Diese Aufgaben werden durch die Gegenstände der unabhängigen Ansprüche gelöst. Vorteilhafte Ausgestaltungen der Erfindung sind Gegenstand der weiteren Patentansprüche sowie der nachfolgenden Beschreibung.

Erfindungsgemäß ist der Betriebszustand einer Werkzeugmaschine oder eine Sequenz einer Fahrt, zumindest eines ihrer Werkzeuge oder zumindest eines darin bearbeiteten Werkstücks identifizierbar. Die Werkzeugmaschine weist zumindest eine vorzugsweise drehbare Einspannvorrichtung zum Einspannen eines zu bearbeitenden Werkstücks und zumindest einen verfahrbaren Werkzeughalter zum Positionieren eines darin gehaltenen Werkzeugs, mit dem das Werkstück bearbeitet werden kann, und Sensoren auf, mit denen zumindest die Position des Werkzeugs und/oder des Werkzeughalters orts- und zeitaufgelöst erfassbar ist. Zur erfindungsgemäßen Identifizierung werden die nachfolgenden Schritte durchgeführt.

Zuerst werden zu einer Serie von aufeinanderfolgenden Zeitpunkten i, mit i= 1...n die Positionen P des Werkzeugs und/oder des Werkzeughalters orts- und zeitaufgelöst von den Sensoren erfasst. Diese Zeitreihen von Daten können sodann unmittelbar nach der Erfassung, also online, gemäß der Schritte b) und c) ausgewertet werden. Ebenso ist es möglich, das erfindungsgemäße Verfahren gemäß der Schritte b) und c) zur Analyse bereits abgeschlossener Betriebsphasen der Werkzeugmaschine zu verwenden. In diesem Fall werden die während dieser Betriebsphasen erfassten und somit historischen Daten dem hier beschriebenen Auswerteverfahren nachträglich, also offline, bereitgestellt.

Die als Zeitreihen zu den Zeitpunkten i vorliegenden Daten der Sensoren zu den Positionen des Werkzeugs und/oder des Werkzeughalters, werden jeweils in einem ersten Berechnungsschritt gemäß

$$\Delta m_i = \frac{P_i}{P_{i-1}} \qquad \text{eq.(1)}$$

in eine Serie von Positionsänderungen $\Delta m_i$ und gemäß

$$\Delta v_i = \frac{v_i}{v_{i-1}} \qquad \text{eq.(2)}$$

mit

$$v_i = \frac{P_i - P_{i-1}}{t_i - t_{i-1}} \text{ und } v_{i-1} = \frac{P_{i-1} - P_{i-2}}{t_{i-1} - t_{i-2}} \qquad \text{eq.(3) und eq.(4)}$$

in eine Serie von Geschwindigkeitsänderungen $\Delta v_i$ umgewandelt.

Aus diesen Datenserien lässt sich sodann der Zustand des Werkzeugs, des Werkzeughalters, der Werkzeugmaschine und/oder des in der Werkzeugmaschine bearbeiteten Werkstücks ermitteln.

Das Besondere liegt in der Einfachheit des angegebenen Verfahrens, welches weder eine komplexe Transformation der ermittelten bzw. bereitgestellten Sensordaten noch das Trainieren eines wie auch immer gestalteten neuronalen Netzes erfordert.

Gemäß der Erfindung werden die Positionen P als Koordinaten $P_i$ ($x_i$, $y_i$, $z_i$) eines kartesischen Koordinatensystems erfasst, abgespeichert und dem Auswerteverfahren bereitgestellt. Somit kann entsprechend der Achsen x, y, z des Koordinatensystems für die Positionsänderungen $\Delta m_i$ ihre jeweiligen Komponenten $\Delta m_{xi}$, $\Delta m_{yi}$, $\Delta m_{zi}$ und für die Geschwindigkeitsänderungen $\Delta v_i$ ihre jeweiligen Komponenten $\Delta v_{xi}$, $\Delta v_{yi}$, $\Delta v_{zi}$ bestimmt werden. Ein derartiges Verfahren basiert dann auf dem von der Werkzeugmaschine ohnehin verwendeten Koordinatensystem, sodass eine Anpassung der von der Werkzeugmaschine erfassten Sensordaten nicht erforderlich ist. Dies unterstützt eine Bestimmung des Betriebszustandes in Echtzeit und ermöglicht eine einfachere Umsetzung des Verfahrens.

Erfindungsgemäß ist der identifizierte Zustand ein Betriebszustand, insbesondere ein Normalbetriebszustand, der eine Bewegung des Werkzeugs bzw. Werkzeughalters, insbesondere zur Werkstückbearbeitung, zur Werkzeugneupositionierung, insbesondere Rückläufern, zum Werkzeugwechsel sowie eine Ruhephase des Werkzeugs bzw. Werkzeughalters, insbesondere eine Stillstandzeit und/oder einen Leerlauf repräsentiert und/oder eine Abweichung von einer vorgegebenen Bewegungsgeschwindigkeit der Einspannvorrichtung, insbesondere Override-Befehlen, darstellt. Außerdem lassen sich mit dem Verfahren einzelne Betriebszustände, wenn es sich um Fahrten handelt, in mehrere Sequenzen mit unterschiedlicher Bedeutung aufteilen. Hierunter wird insbesondere verstanden, dass der Zustand "Zerspanprozess" in die Sequenzen "Heranfahren", "Anschnitt" im Sinne von "das Werkzeug erreicht und kontaktiert das Werkstück", "Schnittsequenz" im Sinne von "das Werkzeug bearbeitet das Werkstück" und "Abschnitt" im Sinne von "das Werkzeug verliert den Kontakt zum Werkstück" unterteilbar ist. Für andere Fahrten und Bewegungen der Elemente gilt dies ebenso.

Vorteilhafterweise erfassen weitere Sensoren elektrische Parameter der Antriebsmotoren der Werkzeugmaschine. Beispielsweise erfassen die weiteren Sensoren die elektrische Stromaufnahme und/oder die anliegende elektrische Versorgungsspannungen der Antriebsmotoren, mittels denen beispielsweise die Einspannvorrichtung gedreht und/oder die Werkzeughalter im Raum bewegt werden. Die dadurch ermittelten Kennlinien und/oder Zeitreihen sind sodann in einem weiteren Verfahrensschritt analysierbar. Beispielsweise werden diese Kennlinien oder Zeitreihen mit den zuvor ermittelten Serien an Positionsänderungen und Geschwindigkeitsänderungen kombiniert, sodass insbesondere eine Analyse der Zerspanprozesse möglich ist. Auch können hieraus Fehler-Betriebszustände ermittelt werden. Derartige Erkenntnisse ermöglichen einerseits den Schutz der Werkzeugmaschine vor Folgeschäden. Andererseits können Beschädigungen am Werkstück erkannt und gemeldet werden, sodass eine zeitnahe Überprüfung des noch unfertigen Werkstücks möglich ist. Hierdurch kann eine unnötige Weiterbearbeitung eines ggf. nicht mehr nutzbaren Werkstücks vermieden werden, was den Nutzungsgrad der Werkzeugmaschine verbessert, Kosten einspart und die Fertigstellung einer Serie von Werkstücken beschleunigt.

Zweckmäßigerweise werden weitere Daten, insbesondere Korrekturfaktoren oder Werkzeugparameter zur Ermittlung der Zustände vorab bereitgestellt und verwendet. Korrekturfaktoren sind beispielsweise solche Werte, die zur exakten Positionsbestimmung der Schneidkante eines Werkzeugs genutzt werden.

In einem vorteilhaften Verfahrensschritt werden die Serie der Positionsänderungen und/oder die Serie der Geschwindigkeitsänderungen anhand einer Grenzwertbetrachtung analysiert. So lässt sich beispielsweise mithilfe der Formel

$$Lim_{v_f} = \frac{\sum_{i=1}^{n} U_{v,f}(i)}{n} \pm \frac{\sqrt{\frac{\sum_{i=1}^{n}(U_{v,f}(i)-\overline{U_{v,f}(i)})^2}{n-1}}}{2}, \qquad \text{eq. (5)}$$

wobei U eine Matrix die Position des Werkzeugs bzw. des Werkzeughalters beschreibt, ermitteln, ob entweder ein Werkzeugwechsel oder ein Zerspanprozess vorliegt.

Eine einfache und effiziente Art der Identifizierung der Zustände ist gegeben, wenn Fallunterscheidungen getroffen werden, bei denen überprüft wird, ob der betreffende Wert für die Positionsänderung $\Delta m_i$ und/oder die Geschwindigkeitsänderung $\Delta v_i$, oder eine bzw. mehrerer ihrer Komponenten kleiner 1, gleich 1, größer 1 oder 0 ist bzw. sind.

Zweckmäßigerweise werden die Serien der Positionsänderungen und/oder der Geschwindigkeitsänderungen in einem Diagramm als Kennlinien dargestellt und/oder in einem Daten-Array bereitgestellt, anhand dessen eine Analyse des jeweiligen Zustands erfolgt.

Besonders bevorzugt wird das Verfahren zur Erkennung einer Überlastung eines der Antriebe der Werkzeugmaschine, zur Erkennung von Verschleiß an der Werkzeugmaschine bzw. am Werkzeug, zur Erkennung eines Herstellungs- oder Werkstück-Fehlers und/oder zur Erkennung von Prozessinstabilitäten, insbesondere von Rattern, d.h. einem Regenerativeffekt, verwendet.

Zweckmäßigerweise ist das voran beschriebene Verfahren bzw. sind dessen bevorzugte Ausgestaltungen computer-implementiert. Demzufolge umfasst die Erfindung auch eine Vorrichtung zur Datenverarbeitung, umfassend Mittel zur Ausführung des Verfahrens oder zur Ausführung einer bevorzugten Ausgestaltung. Weiter umfasst die Erfindung auch ein Computerprogrammprodukt, umfassend Befehle, die bei der Ausführung des Programms durch einen Computer diesen veranlassen, die Schritte des Verfahrens oder einer bevorzugten Ausgestaltung auszuführen. Zur Erfindung gehört ebenso ein computerlesbares Medium, umfassend Befehle, die bei der Ausführung durch einen Computer diesen veranlassen, die Schritte des Verfahrens oder einer bevorzugten Ausgestaltung auszuführen.

Die bisher gegebene Beschreibung bevorzugter Ausgestaltungen der Erfindung enthält zahlreiche Merkmale, die in den einzelnen abhängigen Patentansprüchen teilweise zu mehreren zusammengefasst wiedergegeben sind. Diese Merkmale können jedoch auch einzeln betrachtet und zu sinnvollen weiteren Kombinationen zusammengefasst werden. Insbesondere sind diese Merkmale jeweils einzeln und in beliebiger geeigneter Kombination mit den erfindungsgemäßen Verfahren, der erfindungsgemäßen Vorrichtung zur Datenverarbeitung sowie dem erfindungsgemäßen computerlesbaren Medium kombinierbar. Ferner können Verfahrensmerkmale auch als Eigenschaft einer entsprechenden Vorrichtungseinheit angesehen werden.

Die oben beschriebenen Eigenschaften, Merkmale und Vorteile der Erfindung sowie die Art und Weise, wie diese erreicht werden, werden klarer und deutlicher verständlich im Zusammenhang mit der folgenden Beschreibung der Ausführungsbeispiele der Erfindung, die im Zusammenhang mit den Figuren näher erläutert werden. Die Ausführungsbeispiele dienen der Erläuterung der Erfindung und beschränken die Erfindung nicht auf die darin angegebenen Kombinationen von Merkmalen, auch nicht in Bezug auf funktionale Merkmale.

Es zeigen:

Figur 1    in schematischer Darstellung eine Werkzugmaschine,
Figur 2    den Arbeitsraum der in Figur 1 gezeigten Werkzeugmaschine,
Figur 3    ein Ablaufdiagramm für das Verfahren zur Identifizierung von Zuständen einer Werkzeugmaschine,
Figur 4    das Diagramm eines Zerspanprozesses,
Figur 5    eine Matrix U mit einer Serie von Positionsänderungen.
Figur 6    eine Kennlinie des momentbildenden Stroms der z-Achse für den gesamten Bearbeitungsprozess eines Wertstücks und
Figur 7    eine Kennlinie für den Antriebsmoment der Hauptspindel bei einer einzelnen Bearbeitung.

In allen Figuren werden identische Merkmale mit den gleichen Bezugszeichen versehen.

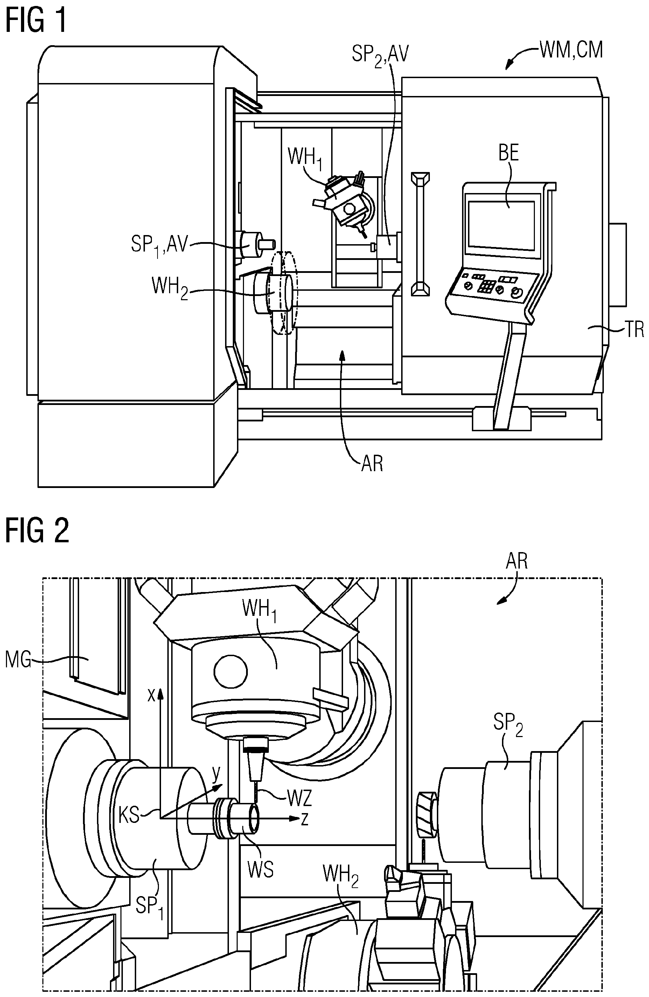

Figur 1 zeigt beispielhaft als eine Werkzeugmaschine WM eine Dreh-Fräs-CNC-Maschine CM. Die Werkzeugmaschine WM umfasst einen von einer Schiebetür TR verschließbaren Arbeitsraum AR, in dem zwei einander gegenüberliegende Spindeln SP, eine Hauptspindel $SP_1$ und eine Nebenspindel $SP_2$, als Einspannvorrichtungen AV, AV zum Einspannen eines zu bearbeitenden Werkstücks WS (Figur 2) vorgesehen sind. Im Arbeitsraum AR sind zudem zwei verfahrbare Werkzeughalter $WH_1$, $WH_2$ vorgesehen, die jeweils mehrere, hier nicht dargestellte Werkzeuge aufnehmen können. Weiter umfasst die Werkzeugmaschine WM ein Steuerungssystem BE zur Programmierung, Steuerung sowie Überwachung ihrer Elemente.

Den Arbeitsraum AR und die darin angeordneten Elemente zeigt sodann Figur 2 im Detail. Die beiden Spindeln SP$_1$ und SP$_2$ sind zueinander konzentrisch und um ihre gemeinsame Längsachse drehbar angeordnet. Sie umfassen zudem jeweils eine Einspannvorrichtung AV, mit denen ein zu bearbeitendes Werkstück WS gedreht werden kann. Weiter besitzt die Werkzeugmaschine WM zwei Werkzeughalter WH$_1$ und WH$_2$, die räumlich, in alle drei Raumrichtungen verschieblich sind. Der obere Werkzeughalter WH$_1$ umfasst als Motor-Fräs-Spindel lediglich drei Stationen, wohingegen der unten angeordnete Werkzeughalter WH$_2$ als Werkzeugrevolver mit mehreren Stationen ausgestaltet ist.

Zur Erfassung der Positionen verwendet das Steuerungssystem BE der Werkzeugmaschine WM ein virtuelles kartesisches Koordinatensystem KS mit den drei jeweils orthogonal zueinanderstehenden Maschinenachsen **x,** y, und **z.** Die beiden Spindeln SP$_1$ und SP$_2$ sowie die daran angeordneten Einspannvorrichtungen AV sind sowohl um die z-Achse drehbar als auch entlang der z-Achse derart verschieblich, dass Werkstücke ohne Unterstützung durch einen Benutzer von der Nebenspindel der Hauptspindel, oder umgekehrt, übergeben werden kann.

An den Arbeitsraum AR grenzt ein Magazinraum MG an, der in der gezeigten Darstellung von einer Magazintür verschlossen ist. Im Magazinraum MG ist eine größere Anzahl an Werkzeugen WZ, **d. h.** Bohrer, Fräsern und dergleichen, angeordnet die von dem oberen Werkzeughalter WH$_1$ bei offener Magazintür gegriffen und darin zurückgelegt oder zurückgeben werden können.

Die Werkzeugmaschine WM kann während ihres Betriebes sich in unterschiedlichen Zuständen, sprich Betriebszuständen, befinden. Hier ist zu unterschieden zwischen fehlerhaften Betriebszuständen einerseits und bestimmungsgemäßen Betriebszuständen, so genannten Normalbetriebszuständen, andererseits. Ein Beispiel für einen fehlerhaften Betriebszustand ist der Zustand "Werkzeugbruch". Andere einen Fehler indizierende Betriebszustände sind denkbar. Dagegen können bestimmungsgemäße Betriebszustände beispielsweise "Zerspanprozess", "Leerlauf", "Override-Befehl" oder auch "Werkzeugwechsel" darstellen. Unter einem Override-Befehl wird ein manueller Eingriff durch einen Benutzer der Werkzeugmaschine WM verstanden, die den programmierten Ablauf einer Werkstückbearbeitung beschleunigt oder verzögert. Weitere bestimmungsgemäße Betriebszustände können auch Sequenzen der vorgenannten Betriebszustände sein, wenn quasi Teilabschnitte davon erkannt werden (sollen). Mittels der durch das Verfahren erkannten Betriebszuständen ist anschließend eine Analyse und ggf. eine Optimierung der Bearbeitung des Werkstücks WS möglich.

Auch das Werkstück kann in unterschiedlichen Zuständen vorliegen. Bezugnehmend auf das Werkstück WS ist mittels des Verfahrens beispielsweise eine ortsaufgelöste Identifikation von möglichen Fertigungsfehlern zur Reduktion des Aufwandes zur Qualitätssicherung möglich.

Zur Ermittlung der Zustände ist die Werkzeugmaschine WM mit einer Vielzahl von nicht dargestellten Sensoren ausgestattet. Mit einigen dieser Sensoren sind die Positionen des Werkzeugs und/oder der Werkzeughalter oder auch der Einspannvorrichtungen orts- und zeitaufgelöst ermittelbar. Meist erfolgt die Erfassung der Position, d. h. der Raumkoordinaten P(x, y, z) der Einspannvorrichtungen AV bzw. des darin eingespannten Werkstück WS, des Werkzeugs WZ bzw. der Werkzeughalter WH$_1$, WH$_2$ für jede Maschinenachse separat durch entsprechend geeignete Sensoren.

Auch können beispielsweise die Position der Schneidkanten der Werkzeuge WZ über die Position der Werkzeughalter ermittelt werden, indem die Werkzeughalterposition um vorab bereitgestellte Daten über die Größe des betreffenden Werkzeugs ergänzt wird. Ebenso ist es möglich zur Ermittlung von Korrekturdaten die Position der Schneidkanten des Werkzeugs in der Werkzeugmaschine WM automatisch zu vermessen. Weitere Sensoren sind in der Lage, die elektrischen Ströme und Versorgungsspannungen der (nicht dargestellten) Antriebsmotoren der Werkzeugmaschine kontinuierlich zu erfassen, mit denen die jeweiligen drehbaren und/oder verschiebbaren Elemente angetrieben, d. h. gedreht und/oder umpositioniert werden kann.

Insofern beinhalten die Signale dieser Sensoren Daten, wie während Maschinenstillständen, Werkzeugwechsel, Leerläufen, Eilgangsfahrten, Beschleunigungseffekte, der Sequenz Anschnitt sowie des eigentlichen Zerspanprozesses erfasst können. Die aufgenommenen Datensignale repräsentieren somit unter anderem Positionsdaten, Antriebsparameter und - leistungen, Korrekturfaktoren oder Werkzeugparameter.

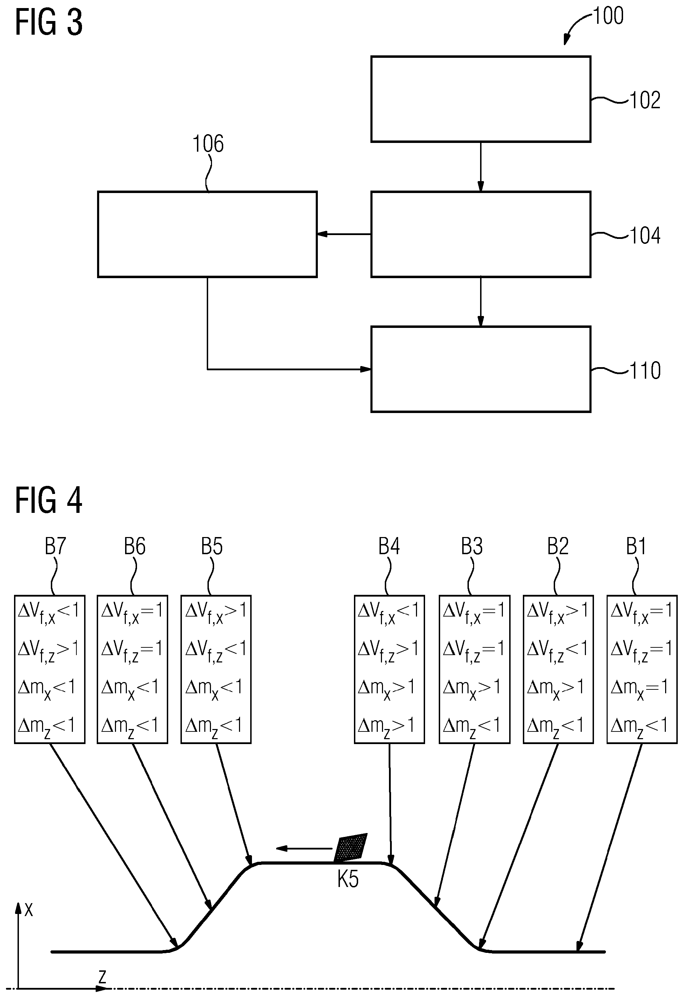

Das zur Identifizierung von Zuständen vorgeschlagene Verfahren ist in Figur 3 schematisch dargestellt, wobei im Folgenden weitere zur Charakterisierung notwendige Begrifflichkeiten definiert werden:

Die Vorschubgeschwindigkeit eines Elements berechnet sich aus dem Produkt des vorliegenden Vorschubes (f) entlang der betrachteten Maschinenachse und der zugehörigen Drehzahl n, nachfolgend lediglich beispielhaft für die x-Achse dargestellt:

$$v_{f,x} = f_x * n \qquad\qquad (1)$$

Für die zur Zustandsidentifizierung benötigte Positionsänderung des betrachteten Elements sei der Vektor Δm eingeführt, definiert aus dem Verhältnis, d.h. Quotienten, seiner Position zu einem beliebigen Zeitpunkt i zu seiner vorherigen Position, also zum Zeitpunkt i-1. Exemplarisch ist dies in Gl. 2 für die x-Koordinate des betreffenden Elements gezeigt.

$$\Delta m_x = \frac{x(i)}{x(i-1)} \qquad (2)$$

Die Methode bietet die Möglichkeit, das Verfahren offline und online einsetzten zu können.

Weiterhin gilt für die Vorschubgeschwindigkeitsänderung in beispielsweise x-Richtung der in Gl. 3 dargestellte Zusammenhang:

$$\Delta v_{f,x} = \frac{v_{f,x}(i)}{v_{f,x}(i-1)} \qquad (3)$$

wobei die Geschwindigkeiten ermittelt werden gemäß

$$v_i = \frac{P_i - P_{i-1}}{t_i - t_{i-1}} \text{ und } v_{i-1} = \frac{P_{i-1} - P_{i-2}}{t_{i-1} - t_{i-2}} \qquad (4), \ (5).$$

In einem ersten Verfahrensschritt 102 des erfindungsgemäßen Verfahrens 100 werden zu einer Serie von Zeitpunkten die jeweils aktuelle Position des Werkzeugs WZ und/oder des Werkzeughalters WH$_1$, WH$_2$ erfasst bzw. als Daten bereitgestellt. Die in einem zweiten Verfahrensschritt 104 erfolgende Verarbeitung dieser Daten gemäß den vorstehenden Gleichungen (1) - (5) kann unmittelbar bei ihrer Entstehung erfolgen, was eine online-Identifikation des Zustands ermöglicht. Bei einer zur Erfassung der Daten zeitlich versetzten Berechnung und Zustandsidentifizierung ist von einer offline-Identifikation des Zustands die Rede. In einem letzten Verfahrensschritt 110 erfolgt dann die Identifizierung des Zustands des Werkzeugs, des Werkzeughalters, der Werkzeugmaschine und/oder des in der Werkzeugmaschine bearbeiteten Werkstücks anhand der zuvor ermittelten bzw. bereitgestellten Positionsänderungen und Geschwindigkeitsänderungen.

Grundsätzlich können für die Positionsänderungen und die Geschwindigkeitsänderungen zwischen unterschiedlichen Fällen je Maschinenachse und je Element unterschieden werden. Dabei ist erstmal nur zu ermitteln, in welche Richtungen sich das Element bewegt. Dies kann mit Hilfe der nachfolgenden Tabelle 1 ermittelt werden. Die Positionsänderungen und die Geschwindigkeitsänderungen stellen im Übrigen nichts anderes als die Quotienten der Rohdaten dar.

**Tabelle 1: <u>Bedeutungen</u> auf Basis <u>der</u> Quotienten**

| Fall | Bedeutung |
|---|---|
| $\Delta m_x < 1$ | Element verfährt in negative x-Richtung |
| $\Delta m_x = 1$ | Element verfährt auf konstantem x-Niveau |
| $\Delta m_x > 1$ | Element verfährt in positive x-Richtung |
| ... | ... |
| $\Delta m_z < 1$ | Element verfährt in negative z-Richtung |
| $\Delta m_z = 1$ | Element verfährt auf konstantem z-Niveau |
| $\Delta m_z > 1$ | Element verfährt in positive z-Richtung |
| $\Delta v_{f,\,x} < 1$ | Vorschubgeschwindigkeit in x-Richtung sinkt |
| $\Delta v_{f,x} = 1$ | Vorschubgeschwindigkeit in x-Richtung ist konstant |
| $\Delta v_{f,x} > 1$ | Vorschubgeschwindigkeit in x-Richtung steigt |
| ... | ... |
| $\Delta v_{f,\,z} < 1$ | Vorschubgeschwindigkeit in z-Richtung sinkt |
| $\Delta v_{f,z} = 1$ | Vorschubgeschwindigkeit in z-Richtung ist konstant |
| $\Delta v_{f,\,z} > 1$ | Vorschubgeschwindigkeit in z-Richtung steigt |

Anschließend lässt sich anhand einer kombinierten Betrachtung zweier oder mehrere Fälle der Zustand, insbesondere der Betriebszustand der Werkzeugmaschine zum betrachteten Zeitpunkt der Serie von Zeitpunkten ermitteln.

Nachfolgend sind beispielhaft einige Bedingungen schematisch aufgelistet, anhand derer das Verfahren unterschiedliche Betriebszustände identifiziert kann.

a) Identifikation von Rückläufen:
Wird an einem Werkstück mehr als ein Zerspanprozess gefahren, so muss das Werkzeug zum Ausgangspunkt zurückgeführt werden. Zur Identifikation dieses Zustandes muss eine der drei unten aufgeführten Bedingungen erfüllt sein:

$$\Delta m_z \; > \; 1 \; \& \; \Delta m_x \; > \; 1$$

$$\Delta m_z \; = \; 1 \; \& \; \Delta m_x \; > \; 1$$

$$\Delta m_z \; > \; 1 \; \& \; \Delta m_x \; = \; 1$$

b) Identifikation von Stillstandszeiten und Leerläufen:
Für den Fall, dass die Werkzeugmaschine während des Bearbeitungsganges beispielsweise durch einen Benutzer händisch in den Leerlauf versetzt wird, sodass trotz sich drehender Hauptspindel keine Bearbeitung stattfindet, gilt die untenstehende Bedingung. Diese gilt ebenfalls für Stillstandszeiten bei einer stehender Hauptspindel

$$\Delta v_{f,x} \; = \; \Delta v_{f,z} \; = \; \Delta v_{f,y} \; = \; 0$$

c) Identifikation von Leerlauf bzw. Stillstand:
Eine Unterscheidung zwischen Leerlauf und Stillstand kann über die aus dem Steuerungssystem BE zusätzlich ausgelesene Spindeldrehzahl vorgenommen werden. Ist die Drehzahl der das Werkstück WS haltenden Einspannvorrichtung AV ungleich 0, so liegt Leerlauf vor.

d) Identifikation von Override-Befehlen:
Das Steuerungssystem BE der Werkzeugmaschine gibt manuell ausgeführte Override-Befehle zurück. Diese können ausgelesen und anschließend verarbeitet werden. Treffen die Bedingungen aus Figur 4 zu, so sind sie dem Zerspanprozess zugeordnet. Override-Befehle ändern die Bedingungen aus Figur 4 nicht. Es gilt zu beachten, dass je nach Befehl, die Bedingungen zur Identifikation von Stillstandszeiten und Leerläufen auch zutreffen können.

e) Identifikation des eigentlichen Zerspanprozesses und Ermittlung der individuellen Schnittsequenzen:
Zur Identifikation der individuellen Schnittsequenzen bei einer durchgehenden Bearbeitung ist im ersten Schritt das Signal der Vorschubgeschwindigkeiten der Achsen zu berücksichtigen. Um sicherzustellen, dass auch geringe Vorschubgeschwindigkeiten während der mechanischen Bearbeitung als solche identifiziert werden, besteht die Möglichkeit, die Werte zu quadrieren und anschließend auf die nächste natürliche Zahl, inkl. 0, zu runden.

Im nächsten Schritt werden die Positionsänderung sowie die Änderung der Vorschubgeschwindigkeit der jeweiligen Achsen mit hoher Genauigkeit bestimmt. Dies bewirkt, dass kleine Abweichungen identifiziert werden können.

Anschließend gilt es eine weitere Fallunterscheidung durchzuführen, sodass die aktuell durchgeführte Schnittsequenz identifiziert werden kann. Die möglichen Fälle sowie die jeweiligen Bedingungen sind in der Figur 4 dargestellt. Die aufgestellten Bedingungen gelten auch für das Stechdrehen und eine Innenbearbeitung des Werkstücks.

Im in Figur 4 gezeigten Ausführungsbeispiel fährt beispielsweise der erste Werkzeughalter $WH_1$ aus seiner Ruheposition in negative z-Richtung. Das Verfahren ist mithilfe der angegebenen Quotienten in der Lage diesen Zustand zu erkennen. Dazu müssen alle in B1 genannten Bedingungen erfüllt sein:

$$\Delta v_{f,x} = 1$$

$$\Delta v_{f,z} = 1$$

$$\Delta m_x = 1$$

$$\Delta m_z < 1$$

Bei fortschreitender Zeit wird der Werkzeughalter WH$_1$ zusätzlich in positive-X-Richtung verfahren, sodass sämtliche Bedingungen B2 erfüllt sind. Mit erstmaligem Auftreten von Sensordaten, die den Bedingungen B4 genügen, erkennt das Verfahren den Beginn eines Zerspanprozesses: die Sequenz Anschnitt. Das Ende des Zerspanprozesses, die Sequenz Abschnitt, wird erkannt, wenn nicht mehr die Bedingungen B4 erfüllt sind, sondern die Bedingungen B5.

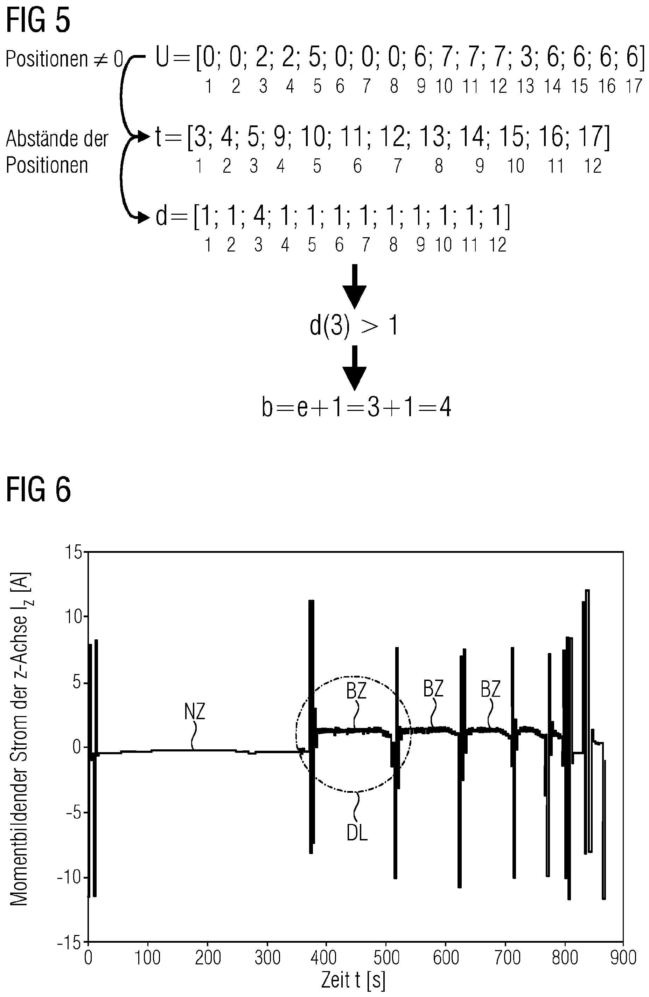

Zur Realisierung des erfindungsgemäßen Verfahrens werden die auf die jeweiligen Fälle zutreffenden Datenpunkte des Rohsignals für jedes Element für jede Maschinenachse jeweils in einer Matrix U, wie in Figur 5 für ein Element für eine Achse exemplarisch dargestellt, gespeichert. Im dargestellten Ausführungsbeispiel sind für siebzehn Zeitpunkte aus einer Serie von Zeitpunkten die zugehörigen siebzehn Quotienten dargestellt. Vorzugsweise handelt es sich bei den Quotienten um die Vorschubgeschwindigkeit in negativer z-Richtung.

Wenn nach einer Selektion von Betriebszuständen ausschließlich Zerspanprozesse weiter analysiert werden sollen, gilt es Werkzeugwechsel diese zu identifizieren und zu eliminieren, da für den Werkzeugwechsel einige dieser Bedingungen ebenfalls zutreffen könnten.

Das Erkennen eines Werkzeugwechsels kann im erfindungsgemäßen Verfahren durch eine Grenzwertbetrachtung erfolgen. Der Grenzwert ist als die Summe aus dem empirischen Mittelwert der in U gespeicherten Vorschubgeschwindigkeiten ($U_{v,f}(i)$) sowie einer Standardabweichung von 50 % definiert:

$$Lim_{v_f} = \frac{\sum_{i=1}^{n} U_{v,f}(i)}{n} \pm \frac{\sqrt{\frac{\sum_{i=1}^{n}(U_{v,f}(i) - \overline{U}_{v,f}(i))^2}{n-1}}}{2} \qquad (5)$$

Sobald ein in der Matrix U vorliegender Datenpunkt der Vorschubgeschwindigkeit diesen Grenzwert überschreitet, so ist dieser als zum Werkzeugwechsel zugehörig identifiziert und wird in der Matrix U zu null gesetzt. Die Indizes der Werte der Matrix U, die nicht als Werkzeugwechsel und somit als zum Zerspanprozess zugehörig erkannt werden, werden zur Selektion der Zerspanprozesse im nächsten Schritt in einen Vektor t geschrieben. Somit enthält der Vektor t lediglich diejenigen Zeitpunkte, in denen die Vorschubgeschwindigkeit in negativer z-Richtung ungleich 0 ist. Durch den Übertrag in den Vektor t können die Abstände (d) der einzelnen Messpunkte zueinander bestimmt werden:

$$d(i) = t(i+1) - t(i)\{i \in \mathbb{N} | 1 \leq i \leq n-1\} \qquad (6)$$

Dies bestimmt die in d gespeicherten Werte. Für ein zusammenhängendes Messsignal ist d = 1. Daher kann durch die Bedingung b = e + 1 der Startwert (b) des Folge-Zerspannprozesses und Endwert (e) des aktuellen Zerspannprozesses jedes individuellen Zerspanprozesses ermittelt werden, welche in der gezeigten Matrix U als solche nicht unmittelbar identifizierbar sind.

Zudem besteht die Möglichkeit, die zeitlichen Verläufe der Positionsänderung und Geschwindigkeitsänderung auch quantitativ zu bewerten und daraus Rückschlüsse über den Betriebszustand für frei wählbare oder auch vorbestimmte Zeitbereiche zu ziehen. So können beispielsweise pulsierende Variationen der Geschwindigkeitsänderungen innerhalb eines betrachteten Zeitbereichs auf einen Regenerativeffekt hindeuten. Mithilfe des Verfahrens ist es auch möglich, Unterschiede in den Geschwindigkeitsänderungen zu erkennen, die während des gleichen Bearbeitungsschritts zweier jedoch nacheinander gefertigter, identischer Werkstücke auftreten. Hieraus können sich Hinweise auf den Verschleiß des währenddessen eingesetzten Werkzeugs ergeben.

Darüber hinaus besteht die Möglichkeit in einem weiteren Verfahrensschritt 106 (Figur 3) weitere interne Maschinensignale, insbesondere elektrische Strom- und Spannungssignale für die Antriebsmotoren der Werkzeugmaschine zu erfassen. Hierzu zeigt Figur 6 den momentbildenden Strom für den für eine Verstellung entlang der z-Achse verantwortlichen Antriebsmotor für den gesamten Bearbeitungsprozess des Werkstücks. Diese umfassen die einzelnen Bearbeitungszeiten BZ sowie die anfallenden Nebenzeiten NZ.

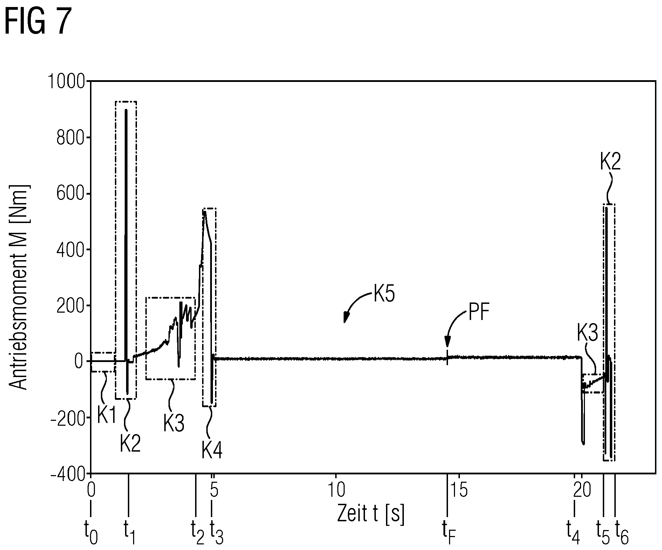

Figur 7 zeigt den Ausschnitt DL aus dem Diagramm gemäß Figur 6 in einer höheren Zeitauflösung. Der Stromverlauf zum Antrieb der Hauptspindel ist über die Zeit dargestellt und lässt sich chronologisch in mehrere Zeitabschnitte unterteilen. Während eines ersten Zeitabschnitts K1 zwischen Zeitpunkt $t_0$ bis zum Zeitpunkt $t_1$ ist der Antrieb im Stillstand. Anschließend tritt ein nadelförmiger Stromimpuls zum Zeitpunkt $t_1$ als Zeitabschnitt K2 auf, an dem sich ein Zeitabschnitt K3 für die Antriebsregelung des Motors anschließt, währenddessen die Hauptspindel an die programmierte Position verfahren wird. Zum Zeitpunkt $t_2$ dort angekommen beginnt der Zeitabschnitt K4, in dem das Werkzeug WZ das Werkstück WS erreicht und einen Kontakt herstellt. Dies ist die Sequenz Anschnitt. Auch der Zeitabschnitt K4 ist vergleichsweise kurz und endet zum Zeitpunkt $t_3$, an sich der Zeitabschnitt K5 für die Hauptbearbeitung des Werkstücks, d.h. der Zerspanprozess anschließt. Sie endet zu Zeitpunkt $t_4$. Sodann erfolgt erneut eine zweite Antriebsregelung K3 zwischen den Zeitpunkten $t_4$ und $t_5$ und ein zweiter Beschleunigungseffekt K2 zwischen $t_5$ und $t_6$.

Somit kann in einem weiteren Verfahrensschritt 106 (Figur 3) derartige Maschinensignale erfasst bzw. bereitgestellt und bei der Identifikation des Zustands im Verfahrensschritt 110 berücksichtigt werden. Dies eröffnet die Möglichkeit, unrentable Prozesszustände, wie beispielsweise Stillstandszeiten, Leerläufe, Werkzeugwechsel, Eilgänge oder besagte Override-Befehle zu identifizieren. Insbesondere die Berücksichtigung der weiteren Maschinensignale ermöglicht es, fehlerhafte Zustände zu erkennen, wenn beispielsweise eine nicht erwartete Änderung im Stromfluss (Figur 7, Pfeil PF) auftritt. Hierdurch lässt sich der Fertigungsprozess bedarfsgerecht anpassen.

Insgesamt können aus dem durchgängigen Fertigungsprozess die einzelnen Zerspanprozesse erkannt und ermittelt werden. Zudem stellt das Verfahren eine einfache sowie kostengünstige Methode zur online/offline Prozessüberwachung während des gesamten Fertigungsprozesses dar.

**Patentansprüche**

1. Verfahren (100) zur offline und/oder online Identifikation eines Betriebszustandes einer Werkzeugmaschine (WM) bei der die Werkzeugmaschine (WM)

    zumindest eine vorzugsweise drehbare Einspannvorrichtung (AV) zum Einspannen eines zu bearbeitenden Werkstücks (WS) und zumindest einen verfahrbaren Werkzeughalter (WH$_1$, WH$_2$) zum Positionieren eines darin gehaltenen Werkzeugs (WZ), mit dem das Werkstück (WS) bearbeitet werden kann, und
    Sensoren aufweist, mit denen zumindest die Position des Werkzeugs und/oder des Werkzeughalters orts- und zeitaufgelöst erfassbar ist, umfassend die Schritte:

    a) zu einer Serie von Zeitpunkten i, i=1...n Erfassen oder Bereitstellen (102) von Positionen P des Werkzeugs und/oder des Werkzeughalters (WH$_1$, WH$_2$), wobei die Positionen P als Koordinaten $P_i(x_i, y_i, z_i)$ eines kartesischen Koordinatensystems (KS) vorliegen **dadurch gekennzeichnet dass** es außerdem die folgenden Schritte umfasst

    b) Ermitteln (104) für die Serie von Zeitpunkten i b1) eine Serie von Positionsänderungen $\Delta m_i$ des Werkzeugs (WM), des Werkzeughalters (WH$_1$, WH$_2$) bzw. der Einspannvorrichtung (AV) gemäß

    $$\Delta m_i = \frac{P_i}{P_{i-1}}$$

    und b2) eine Serie von Geschwindigkeitsänderungen $\Delta v_i$ des Werkzeugs (WM), des Werkzeughalters (WH$_1$, WH$_2$) bzw. der Einspannvorrichtung (AV) gemäß

    $$\Delta v_i = \frac{v_i}{v_{i-1}}$$

    mit

    $$v_i = \frac{P_i - P_{i-1}}{t_i - t_{i-1}} \quad \text{und} \quad v_{i-1} = \frac{P_{i-1} - P_{i-2}}{t_{i-1} - t_{i-2}},$$

    wobei entsprechend den Achsen x, y, z des kartesischen Koordinatensystems (KS) für die Positionsänderungen $\Delta m_i$ ihre jeweiligen Komponenten $\Delta m_{xi}$, $\Delta m_{yi}$, $\Delta m_{zi}$ und für die Geschwindigkeitsänderungen $\Delta v_i$ ihre jeweiligen Komponenten $\Delta v_{xi}$, $\Delta v_{yi}$, $\Delta v_{zi}$ bestimmt werden,
    c) Identifizieren (110) des Betriebszustands der Werkzeugmaschine (WM) anhand der Positionsänderungen $\Delta m_i$ und der Geschwindigkeitsänderungen $\Delta v_i$, wobei der Betriebszustand eine Bewegung des Werkzeugs bzw. Werkzeughalters, eine Ruhephase des Werkzeugs bzw. Werkzeughalters repräsentiert und/oder eine Abweichung von einer vorgegebenen Bewegungsgeschwindigkeit der Einspannvorrichtung darstellt.

2. Verfahren (100) nach Anspruch 1,
   wobei der Betriebszustand

    d) die Bewegung des Werkzeugs bzw. Werkzeughalters

d1) zur Werkstückbearbeitung, insbesondere Schnittsequenzen,
d2) zur Werkzeugneupositionierung, insbesondere Rückläufern,
d3) zum Werkzeugwechsel, repräsentiert, wobei

e) eine Stillstandzeit und/oder einen Leerlauf repräsentiert und/oder
f) die Abweichung von Override-Befehlen,

darstellt.

3. Verfahren (100) nach einem der vorherigen Ansprüche, bei dem weitere Sensoren elektrische Parameter von Antriebsmotoren der Werkzeugmaschine erfassen.

4. Verfahren (100) nach einem der vorherigen Ansprüche, bei dem weitere Daten, insbesondere Korrekturfaktoren oder Werkzeugparameter, zur Ermittlung der Zustände vorab bereitgestellt bzw. ermittelt und während der Identifizierung verwendet werden.

5. Verfahren (100) nach einem der vorherigen Ansprüche, bei dem die Serie der Positionsänderungen $\Delta m_i$ und/oder der Geschwindigkeitsänderungen $\Delta v_i$ anhand einer Grenzwertbetrachtung analysiert werden.

6. Verfahren (100) nach einem der vorherigen Ansprüche, bei dem die Identifizierung des Zustands anhand von Fallunterscheidungen getroffen werden, bei denen geprüft wird, ob der betreffende Wert für die Positionsänderung $\Delta m_i$ und/oder die Geschwindigkeitsänderung $\Delta v_i$, oder, sofern von Anspruch 2 abhängig, eine ihrer Komponenten kleiner 1, gleich 1, größer 1 oder 0 ist bzw. sind.

7. Verfahren (100) nach einem der vorherigen Ansprüche,
bei dem die Serie der Positionsänderungen $\Delta m_i$ und/oder der Geschwindigkeitsänderung $\Delta v_i$ in einem Diagramm als Kennlinien dargestellt oder in einem Daten-Array bereitgestellt werden und anhand dessen eine Analyse des jeweiligen Zustands erfolgt.

8. Verfahren (100) nach einem der vorherigen Ansprüche, verwendet

g) zur Erkennung einer Überlastung eines der Antriebe der Werkzeugmaschine,
h) zur Erkennung von Verschleiß an der Werkzeugmaschine bzw. am Werkzeug,
i) zur Erkennung eines Herstellungs- oder Werkstück-Fehlers und/oder
j) zur Erkennung von Prozessinstabilitäten, insbesondere von Rattern (Regenerativeffekt).

9. Verfahren (100) nach einem der vorherigen Ansprüche, welches computer-implementiert ist.

10. Vorrichtung, insbesondere ein Steuerungssystem (BE), zur Datenverarbeitung, umfassend Mittel zur Ausführung des Verfahrens nach einem der Ansprüche 1 bis 9.

11. Computerprogrammprodukt, umfassend Befehle, die bei der Ausführung des Programms durch einen Computer diesen veranlassen, die Schritte des Verfahrens (100) nach einem der Ansprüche 1 bis 9 auszuführen, wobei das Verfahren (100) zur offline und/oder online Identifikation eines Betriebszustands einer Werkzeugmaschine (WM) ausgebildet ist, und die Werkzeugmaschine (WM) Sensoren aufweist, mit denen zumindest die Position des Werkzeugs (WZ) und/oder der Werkstückhalters (WH$_1$, WH$_2$) orts- und zeitaufgelöst erfassbar ist, wobei das Verfahren (100) den Schritt a) umfasst, in dem zu einer Serie von Zeitpunkten i, i=1...n Positionen P des Werkzeugs (WZ) und/oder des Werkzeughalters (WH$_1$, WH$_2$) erfasst werden.

12. Computerlesbares Medium, umfassend Befehle, die bei der Ausführung durch einen Computer diesen veranlassen, die Schritte des Verfahrens (100) nach einem der Ansprüche 1 bis 9 auszuführen, wobei das Verfahren (100) zur offline und/oder online Identifikation eines Betriebszustands einer Werkzeugmaschine (WM) ausgebildet ist, und die Werkzeugmaschine (WM) Sensoren aufweist, mit denen zumindest die Position des Werkzeugs (WZ) und/oder der Werkstückhalters (WH$_1$, WH$_2$) orts- und zeitaufgelöst erfassbar ist, wobei das Verfahren (100) den Schritt a) umfasst, in dem zu einer Serie von Zeitpunkten i, i=1...n Positionen P des Werkzeugs (WZ) und/oder des Werkzeughalters (WH$_1$, WH$_2$) erfasst werden.

**Claims**

1. Method (100) for the offline and/or online identification of an operating state of a machine tool (WM),

   wherein the machine tool (WM) has
   at least one preferably rotatable clamping apparatus (AV) for clamping a workpiece (WS) to be processed, and
   at least one tool holder (WH$_1$, WH$_2$) which is able to be moved for positioning a tool (WZ) which is held therein with which the workpiece (WS) can be processed, and
   sensors with which at least the position of the tool and/or the tool holder can be detected in a spatially and time-resolved manner, comprising the steps:

   a) for a series of time points i, i = 1...n, detecting or providing (102) positions P of the tool and/or the tool holder (WH$_1$, WH$_2$), wherein the positions P are present as coordinates P$_i$ (x$_i$, y$_i$, z$_i$) of a Cartesian coordinate system (KS), **characterised in that** it additionally comprises the following steps:
   b) establishing (104) for the series of time points i b1) a series of position changes $\Delta m_i$ of the tool (WM), the tool holder (WH$_1$, WH$_2$) and/or the clamping apparatus (AV)
   in accordance with

$$\Delta m_i = \frac{P_i}{P_{i-1}}$$

   and b2) a series of speed changes $\Delta v_i$ of the tool (WM), the tool holder (WH$_1$, WH$_2$) and/or the clamping apparatus (AV) in accordance with

$$\Delta v_i = \frac{v_i}{v_{i-1}}$$

   where

$$v_i = \frac{P_i - P_{i-1}}{t_i - t_{i-1}} \quad \text{and} \quad v_{i-1} = \frac{P_{i-1} - P_{i-2}}{t_{i-1} - t_{i-2}},$$

   wherein according to the axes x, y, z of the Cartesian coordinate system (KS) for the position changes $\Delta m_i$ their respective components $\Delta m_{xi}$, $\Delta m_{yi}$, $\Delta m_{zi}$ and for the speed changes $\Delta v_i$, their respective components $\Delta v_{xi}$, $\Delta v_{yi}$, $\Delta v_{zi}$ are determined,
   c) identifying (110) the operating state of the machine tool (WM) on the basis of the position changes $\Delta m_i$ and the speed changes $\Delta v_i$, wherein

   the operating state represents a movement of the tool or tool holder, a rest phase of the tool or tool holder and/or represents a deviation from a predetermined movement speed of the clamping apparatus.

2. Method (100) according to claim 1,
   wherein the operating state represents

   d) the movement of the tool and/or the tool holder

   d1) for workpiece processing, in particular cutting sequences,
   d2) for tool repositioning, in particular return movements,
   d3) for tool changing, wherein

   e) the operating state represents a standstill time and/or an idling and/or
   f) the deviation from override commands.

3. Method (100) according to one of the preceding claims,
   wherein further sensors detect electrical parameters of drive motors of the machine tool.

4. Method (100) according to one of the preceding claims,

wherein further data, in particular correction factors or tool parameters for determining the states are provided and/or established in advance and are utilized during the identification.

5. Method (100) according to one of the preceding claims, wherein the series of position changes $\Delta m_i$ and/or the speed changes $\Delta v_i$ are analyzed on the basis of a limit value consideration.

6. Method (100) according to one of the preceding claims, wherein the identification of the state is made on the basis of case distinctions, wherein it is tested whether the value in question for the position change $\Delta m_i$ and/or the speed change $\Delta v_i$, or if dependent upon claim 2, one of its components is/are less than 1, equal to 1, greater than 1, or 0.

7. Method (100) according to one of the preceding claims, wherein the series of position changes $\Delta m_i$ and/or the speed change $\Delta v_i$ are represented in a diagram as characteristic lines or are provided in a data array and, on the basis thereof an analysis of the respective state takes place.

8. Method (100) according to one of the preceding claims, used

   g) for recognizing an overloading of one of the drives of the machine tool,
   h) for recognizing wear on the machine tool and/or on the tool,
   i) for recognizing a production or workpiece fault and/or
   j) for recognizing process instabilities, in particular juddering (regenerative effect).

9. Method (100) according to one of the preceding claims, which is computer-implemented.

10. Apparatus, in particular a control system (BE), for data processing, comprising means for carrying out the method according to one of claims 1 to 9.

11. Computer program product comprising commands which, on execution of the program by way of a computer cause said computer to carry out the steps of the method (100) according to one of claims 1 to 9, wherein the method (100) is embodied for the offline and/or online identification of an operating state of a machine tool (WM), and the machine tool (WM) has sensors with which at least the position of the machine tool (WZ) and/or the tool holder (WH$_1$, WH$_2$) can be detected in a spatially and time-resolved manner, wherein the method (100) comprises the step a), in which, for a series of time points i, i = 1...n, positions P of the tool (WZ) and/or the tool holder (WH$_1$, WH$_2$) are detected.

12. Computer-readable medium comprising commands which, on execution by way of a computer cause said computer to carry out the steps of the method (100) according to one of claims 1 to 9, wherein the method (100) is embodied for the offline and/or online identification of an operating state of a machine tool (WM), and the machine tool (WM) has sensors with which at least the position of the machine tool (WZ) and/or the tool holder (WH$_1$, WH$_2$) can be detected in a spatially and time-resolved manner, wherein the method (100) comprises the step a), in which, for a series of time points i, i = 1...n, positions P of the tool (WZ) and/or the tool holder (WH$_1$, WH$_2$) are detected.

**Revendications**

1. Procédé (100) d'identification offline et/ou online d'un état de fonctionnement d'une machine-outil (WM), dans lequel la machine-outil (WM) a au moins un dispositif (AV) de blocage, de préférence tournant, pour le blocage d'une pièce (WS) à usiner et au moins un porte-outil (WH$_1$, WH$_2$) déplaçable pour la mise en position d'un outil (WZ), qui y est maintenu, par lequel la pièce (WS) peut être usinée, et des capteurs, par lesquels au moins la position de l'outil et/ou du porte-outil peut être détectée d'une manière résolue dans l'espace et dans le temps, comprenant les stades :

   a) à une série d'instants i, i=1...n, détection ou mise à disposition (102) de positions P de l'outil et/ou du porte-outil (WH$_1$, WH$_2$), dans lequel les positions P se présentent sous la forme de coordonnées P$_i$ (x$_i$, y$_i$, z$_i$) d'un système (KS) de coordonnées cartésien, **caractérisé en ce qu'**il comprend en outre les stades suivants
   b) détermination (104) pour la série d'instants i b1) d'une série de modifications $\Delta m_i$, de position de l'outil (WM), du porte-outil (WH$_1$, WH$_2$) et respectivement du dispositif (AV) de blocage suivant

$$\Delta m_i = \frac{P_i}{P_{i-1}}$$

b2) d'une série de modifications $\Delta v_i$ de vitesse de l'outil (WM), du porte-outil (WH$_1$, WH$_2$) et respectivement du dispositif (AV) de blocage suivant

$$\Delta v_i = \frac{v_i}{v_{i-1}}$$

$$v_i = \frac{P_i - P_{i-1}}{t_i - t_{i-1}} \qquad \text{et} \qquad v_{i-1} = \frac{P_{i-1} - P_{i-2}}{t_{i-1} - t_{i-2}} \quad ,$$

dans lesquelles on détermine, conformément aux axes x, y, z du système (KS) de coordonnées cartésien pour les modifications $\Delta m_i$ de position, leurs composantes $\Delta m_{xi}$, $\Delta m_{yi}$, $\Delta m_{zi}$ respectives et pour les modifications $\Delta v_i$ de vitesse, leurs composantes $\Delta v_{xi}$, $\Delta v_{yi}$, $\Delta v_{zi}$ respectives,
c) identification (110) de l'état de fonctionnement de la machine-outil (WM) à l'aide des modifications $\Delta m_i$ de position et des modifications $\Delta v_i$ de vitesse, dans lequel l'état de fonctionnement représente un déplacement de l'outil ou du porte-outil, une phase de repos de l'outil ou du porte-outil et/ou un écart à une vitesse de déplacement donnée à l'avance du dispositif de blocage.

2. Procédé (100) suivant la revendication 1,
   dans lequel l'état de fonctionnement représente

   d) le déplacement de l'outil et respectivement du porte-outil

      d1) pour l'usinage de la pièce, en particulier des séquences de coupe,
      d2) pour le repositionnement de l'outil, en particulier des retours,
      d3) pour le changement d'outil, dans lequel

   e) représente un temps d'arrêt et/ou de marche à vide et/ou
   f) représente l'écart, à des instructions d'override.

3. Procédé (100) suivant l'une des revendications précédentes, dans lequel d'autres capteurs détectent des paramètres électriques de moteurs d'entraînement de la machine-outil.

4. Procédé (100) suivant l'une des revendications précédentes, dans lequel on prépare à l'avance ou on détermine d'autres données, en particulier des facteurs de correction ou des paramètres d'outil, pour la détermination des états et on les utilise pendant l'identification.

5. Procédé (100) suivant l'une des revendications précédentes, dans lequel on analyse, à l'aide d'une prise en considération de valeurs limites, la série des modifications $\Delta m_i$ de position et/ou des modifications $\Delta v_i$ de vitesse.

6. Procédé (100) suivant l'une des revendications précédentes, dans lequel on obtient l'identification de l'état, à l'aide de discriminations de cas, dans lesquels on contrôle, si la valeur concernée pour la modification $\Delta m_i$ de position et/ou la modification $\Delta v_i$ de vitesse ou, dans la mesure où la revendication 6 dépend de la revendication 2, si l'une de ses composantes est ou sont plus petites que 1, égales à 1, plus grandes que 1 ou 0.

7. Procédé (100) suivant l'une des revendications précédentes, dans lequel on représente la série des modifications $\Delta m_i$ de position et/ou des modifications $\Delta v_i$ de vitesse dans un diagramme sous la forme de courbes caractéristiques ou on les met à disposition dans un réseau de données et à l'aide duquel on effectue une analyse de l'état respectif.

8. Procédé (100) suivant l'une des revendications précédentes, utilisé

      g) pour l'identification d'une surcharge de l'un des entraînements de la machine-outil,
      h) pour l'identification d'usure sur la machine-outil ou l'outil,
      i) pour l'identification d'un défaut de fabrication ou de la pièce et/ou
      j) pour l'identification d'instabilités opératoires, en particulier de broutages (effet régénératif).

**9.** Procédé (100) suivant l'une des revendications précédentes, qui est mis en œuvre par ordinateur.

**10.** Installation, en particulier un système (BE) de commande, de traitement de données, comprenant des moyens d'exécution du procédé suivant l'une des revendications 1 à 9.

**11.** Produit de programme d'ordinateur, comprenant des instructions, qui, lors de l'exécution du programme par ordinateur, font que celui-ci exécute les stades du procédé (100) suivant l'une des revendications 1 à 9, dans lequel le procédé (100) est constitué pour l'identification offline et/ou online d'un état de fonctionnement d'une machine-outil (WM) et la machine-outil (WM) a des capteurs, par lesquels on peut détecter, avec résolution dans l'espace et dans le temps, au moins la position de l'outil (WZ) et/ou du porte-outil ($WH_1$, $WH_2$), dans lequel le procédé (100) comprend le stade a), dans lequel on détecte à une série d'instants i, i=1...n des positions P de l'outil (WZ) et/ou du porte-outil ($WH_1$, $WH_2$).

**12.** Support déchiffrable par ordinateur, et comprenant des instructions, qui, lors de l'exécution par un ordinateur, font que celui-ci exécute les stades du procédé (100) suivant l'une des revendications 1 à 9, dans lequel le procédé est constitué pour l'identification offline et/ou online d'un état de fonctionnement d'une machine-outil (WM) et la machine-outil (WM) a des capteurs, par lesquels on peut détecter, avec résolution dans l'espace et dans le temps, au moins la position de l'outil (WZ) et/ou du porte-outil ($WH_1$, $WH_2$), dans lequel le procédé (100) comprend le stade a), dans lequel on détecte à une série d'instants i, i=1...n, des positions P de l'outil (WZ) et/ou du porte-outil ($WH_1$, $WH_2$).

## FIG 1

## FIG 2

# FIG 3

# FIG 4

# FIG 5

Positionen ≠ 0

$U = [0; 0; 2; 2; 5; 0; 0; 0; 6; 7; 7; 7; 3; 6; 6; 6; 6]$

1 2 3 4 5 6 7 8 9 10 11 12 13 14 15 16 17

Abstände der Positionen

$t = [3; 4; 5; 9; 10; 11; 12; 13; 14; 15; 16; 17]$

1 2 3 4 5 6 7 8 9 10 11 12

$d = [1; 1; 4; 1; 1; 1; 1; 1; 1; 1; 1; 1]$

1 2 3 4 5 6 7 8 9 10 11 12

$$d(3) > 1$$

$$b = e + 1 = 3 + 1 = 4$$

# FIG 6

# FIG 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2020038815 A1

**In der Beschreibung aufgeführte Nicht-Patentliteratur**

- Recent progress of chatter prediction, detection and suppression in milling. **ZHU LIDA et al.** MECHANICAL SYSTEMS AND SIGNAL PROCESSING. ELSEVIER, 31 March 2020, vol. 143

- Using kernel data in machine tools for the indirect evaluation of surface roughness in vertical milling operations. **GUILLEM QUINTANA et al.** ROBOTICS AND COMPUTER INTEGRATED MANUFACTURING. ELSEVIER SCIENCE PUBLISHERS BV., 24 May 2011, vol. 27, 1011-1018